# EUROPEAN PATENT SPECIFICATION

(11) **EP 3 845 048 B1**
(45) Date of publication and mention of the grant of the patent: **15.01.2025**
(21) Application number: 20020657.1
(22) Date of filing: 30.12.2020
(51) Int. Cl.: A01B 59/06, A01B 61/02, A01B 63/24, A01D 34/64, A01D 34/66, A01D 34/86

(54) **AGRICULTURAL MACHINE**
LANDWIRTSCHAFTLICHE MASCHINE
MACHINE AGRICOLE

(30) Priority: 31.12.2019 IT 201900025861
(43) Date of publication of application: 07.07.2021
(73) Proprietor: ORSI Group S.R.L., 40050 Mascarino di Castello d'Argi (BO) (IT)
(72) Inventor: Orsi, Stefano, 40050 Mascarino di Castello d'Argile (BO) (IT)
(74) Representative: Mincone, Antimo

(56) References cited:
- EP-A1- 1 690 443
- WO-A1-2018/087623
- ES-A1- 2 618 331
- IT-A1- PD20 100 330
- JP-A- 2012 039 941
- JP-A- 2012 060 911
- US-A- 3 930 543

## Description

The present invention relates to an agricultural machine. In particular, the invention relates to an agricultural machine, carried and driven by a tractor which provides for its displacement and for the movement of its operating organs.

The agricultural machine may be differently shaped and may be intended for different uses in the purely agricultural field or in similar fields such as, for example, forestry, road maintenance, riverbed maintenance, etc. The machine may be, for example, a brush cutter, a mulcher, a ditch digger, a forestry or a soil working equipment, etc.

The movement and operational handling of agricultural machines is achieved by connection to the tractor via the three-point hitch and power take-off.

The agricultural machine carried by the tractor is attached to the three-point hitch by means of a connecting structure that can be differently shaped and dimensioned depending on the agricultural machine it is to support. On the connecting structure, however, there are three machine-side attachments which are attached to the corresponding three tractor-side attachments defined by the tractor's three-point connection. Between the connecting structure that is attached to the three-point hitch and the working head of the machine there are articulation means which may comprise an articulated parallelogram and/or arms and/or jacks and which allow the working head of the machine to be displaced, for example to the right and left with respect to the direction of travel of the tractor; these means of articulation comprise a proximal portion and a distal portion. The proximal portion is defined by a bracket (or other means of attachment) integral with the connection structure and external to the three-point linkage, on this proximal portion being the proximal hinges of the articulated parallelogram (and/or of the connection arms and/or jacks), i.e. the hinge axes of the articulating means of the agricultural machinery placed on the side nearest to the tractor. In this usual configuration, the hinge points of the support arm, as well as those of the strut acting as a parallelogram, are distant from the pins of the tractor's lift connection, which are located externally to the tractor, the term "externally" being used to indicate a position behind the tractor when the machine is mounted at the rear or ahead of the tractor when the machine is mounted at the front.

The distal portion of the articulating means is integral with the working head of the machine and contains the hinge axes of the articulating means of the agricultural machine on the side nearest the working head of the machine.

The movement of the active parts of the agricultural machine, such as, for example, the means of cutting, soil treatment and the like, is obtained thanks to the motion transmitted by the power take-off through a cardan shaft.

Agricultural machines and equipment using the three-point hitch are described in EP1690443A1, WO2018/087623A1, US3930543, EP3318114A1.

As is well known, the power take-off consists of a coupling at the rear, and often also at the front, of agricultural tractors, where devices are attached. The power take-off drives the elements predisposed to the movement of operating machines by means of power supplied directly by the tractor engine in the form of torque supplied by a rotating shaft that can be connected to the operating machine (mechanical power take-off) and/or of hydraulic pressure that is transmitted to jacks and/or hydraulic motors located on the operating machine itself (hydraulic power take-off).

The cardan shaft is precisely the mechanical component that transmits power from the tractor to the agricultural machines, allowing the transmission of rotary motion between two axes located in various places in space, even in conditions of continuously variable reciprocal position, provided that such displacements are contained within the constructional limits declared by the manufacturer. In practice, their function is to transfer motion from a driving machine, generally the tractor, to an operating machine, while at the same time allowing the tractor-operating machine combination to perform reciprocal bends, lifting and lowering.

The cardan shaft generally consists of two joints connected together by two telescopic tubular elements, which can then slide into each other. There are therefore two constructional limits in the longitudinal direction relating to an "all closed" configuration and an "all open" configuration.

One of the problems relating to the connection of an agricultural machine to a tractor relates to the positioning of the power take-off shaft in certain limit positions in which, in particular, it is "offset" by a relatively high value.

This negative feature is most evident when the agricultural machine is mounted at the front of the tractor. In fact, when the machine is mounted at the rear of the tractor, the cardan shaft speed is conventionally 540 rpm, whereas if the machine is mounted at the front, almost all tractors have the power take-off rotating at only 1000 rpm. At this latter speed the shaft can be dangerous and unusable when it is in a configuration/angle for which it is offset by a relatively high value.

In other words, use in a limited configuration of the agricultural machine (e.g. maximum lateral displacement) is permitted when the machine is mounted at the rear of the tractor, but is not possible when it is mounted at the front because it could cause the telescopic elements to slip out of alignment and the machines to decouple, with negative repercussions on the operation of the machine and, above all, on the safety of the operators. In traditional machines, therefore, situations may arise in which, even if the decoupling of the two portions of the cardan shaft is not completed, the latter may reach such a level of torsional and bending oscillations of a harmonic type that it may soon lead to resonance problems.

Even in machines that use a cardan shaft in a single body, the positioning of the machine is constrained by the achievement of limit angles beyond which the machine cannot work.

One of the aims of the present invention is to eliminate the above-mentioned drawbacks by means of an agricultural machine having the features indicated in claim 1. Further features are in the dependent claims.

Among the advantages of the present invention are the following: the agricultural machine in question can be mounted both to the rear and to the front of the tractor, and with it the motion is transmitted by the cardan shaft in an effective and safe manner; when the agricultural machine is supported at the front by the tractor, the kinematic connection between the tractor and the operating head of the agricultural machine is made by means of a single cardan shaft that never extends beyond a predetermined safety value, while still guaranteeing lateral movement of the head without positioning constraints; the machine can consist of various types of operating machines, such as, for example, a shredder, a brush cutter, a machine for treating the ground, etc.; the machine can be made up of operating machines equipped with a single-piece cardan shaft, which cannot be extracted; the means of articulation between the tractor and the machine are supported by the connection structure in a point that is never external with respect to the connection portions of the same structure intended for the three-point hitch of the tractor, determining an optimal geometry configuration for exploitation the cardan shaft; the machine can be provided with means for adjusting the end stroke of the articulation means which allow the machine to be used with a plurality of tractors which have a different configuration of the means for connection to the same machine; the machine is able to work keeping the operating head placed exactly in the center with respect to the longitudinal axis of the tractor; the machine allows to work with the operating head in front of the tractor, thus increasing work safety and precision of treatments; the machine has a relatively simplified construction requiring the use of components characterized by simplicity and robustness such as to provide the machine, in combination with the high structural functionality, features that remain unchanged even after prolonged use.

These and further advantages and features of the present invention will be more and better understood by any technician of the field by the description which follows and with the help of the annexed drawings, given as a practical example of the invention, but not to be considered in a limiting sense, in which:
Figs. 1, 2 and 3 represent, in a schematic plan view from above, a possible embodiment of a machine in accordance with the invention mounted in front of a tractor, in three different operating configurations;
Figs. 4 and 5 are enlarged details of Fig.1;
Figs. 6, 7 and 8 represent, in a schematic plan view from above, another possible example of the construction of a machine in conformity with the invention mounted in front of a tractor, in three different operating configurations;
Fig. 9 is an enlarged detail of Fig.6;
Fig. 10 is a perspective view of the example referred to in Figs. 6-9, and shows the means of movement and articulation of the machine of the invention; in the figure, a detail, relating to a jack, is also represented in an exploded view for better visualization;
Fig. 11 is an exploded perspective view of some details of Fig. 10.

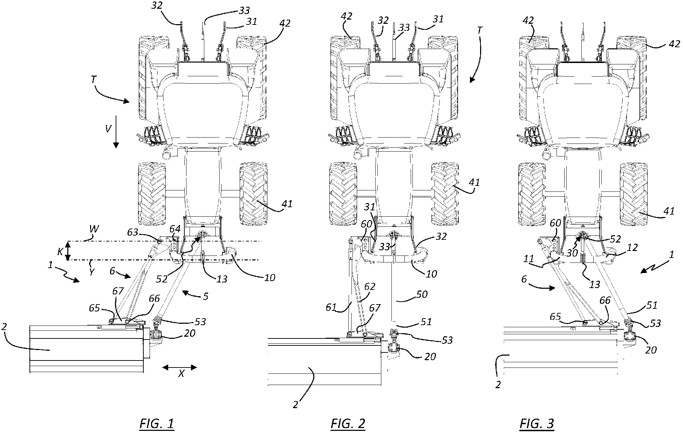

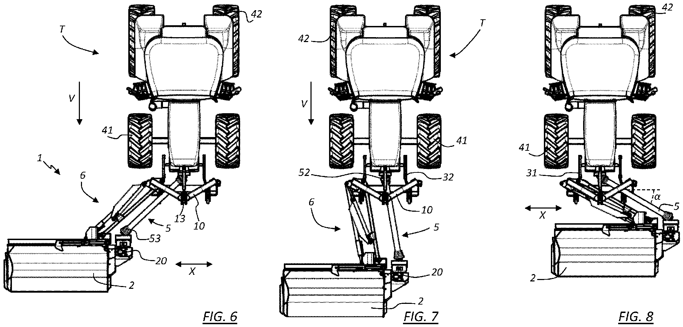

With reference to the non-limiting figures of the attached drawings, an agricultural machine (1) constructed in accordance with the invention can be used carried by a tractor (T) which is provided, both at the front and at the rear, with a three-point hitch (31, 32, 33) and a power take-off (30). In the schematic drawings in Figs.1-3 the three-point hitch (31, 32, 33) are shown both at the front and at the rear, while the power take-off (30) is shown only at the front of the tractor (T) because the rear power take-off is not visible in the attached top views. In particular, references (31) and (32) show the attachments for the lifting arms and reference (33) the third attachment point. The tractor (T) shown schematically in the example in Figs. 6-9 is provided with the three-point hitch (31, 32, 33) at the front only.

The arrow (V), visible in Fig.1, indicates the direction of travel of the tractor (T), which moves forward with the front part, which, provided with the front wheels (41), precedes the rear part, which in turn is provided with the rear wheels identified by the reference (42).

The agricultural machine (1) is connected to the tractor (T) by means of a connection structure (10), which is provided with three connection portions (11, 12, 13) for attachment to the three-point hitch (31, 32, 33) of the tractor (T).

The proximal portion (60) of the articulating means (6), which allow the lateral displacement (X) of the operating head (2) of the machine (1), is fixed to the connecting structure (10).

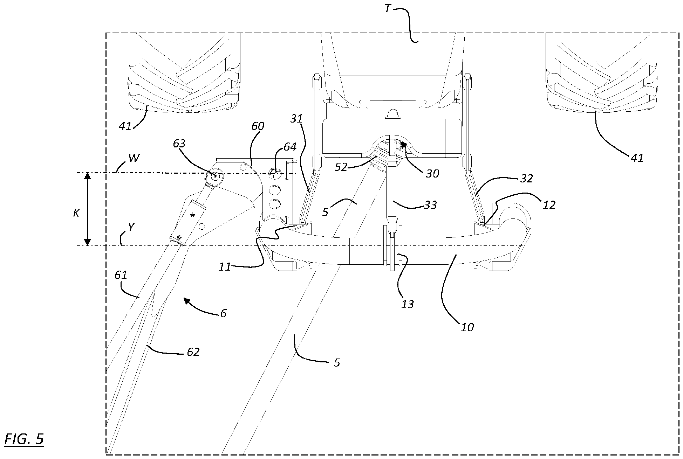

In the example illustrated in Figs. 1-5, the articulating means (6) comprise an articulated parallelogram composed of two arms (61) and (62) which are hinged at their proximal ends to a bracket (60) fixed to the connecting structure (10) and at their distal ends to a plate (67) fixed to the operating head (2) of the machine (1). In particular, on the bracket (60) there are two hinge points or pins (63, 64) around which the arm (61) and the arm (62) are hinged, respectively. Similarly, on the plate (67) there are two hinge points or hinge pins (65) and (66) around which the arm (61) and the arm (62) are hinged, respectively.

The kinematic connection between the tractor's (T) power take-off (30) and the coupling (20) located on the operating head (2) is defined by a cardan shaft (5). In particular, the cardan shaft (5) has a proximal end (52) connected to the power take-off (30) of the tractor (T) and a distal end (53) connected to the coupling (20) located on the operating head (2). In the example of Figs. 1-5, the cardan shaft (5) is made up of two telescopic elements (50) and (51), of which the external coaxial element (50) is in a proximal position, i.e. connected to the power take-off (30) via the proximal end (52). In practice, there is only one transmission means connecting the transmission between the tractor (T) and the operating head (2), in the example consisting of a mulcher (2).

Advantageously, in accordance with the invention, the means of articulation (6) between the tractor and the machine are supported by the connecting structure (10) at a point which is never external to the connecting portions of the same structure intended for the three-point hitch of the tractor; in particular, the hinge points (63) and (64) are never external to the points (31) and (32) of the lifting arms, i.e. the hinge points (63) and (64) are no further from the tractor than the said points (31) and (32) of the lifting arms.

In this description, the term external means further away from the tractor. In practice, with the machine (1) carried at the front by the tractor (T), a first point is understood to be more internal than a second point when the first point is closer to the tractor, i.e. back disposed in the direction of travel (V) of the tractor (T).

Referring to the drawings in Figs. 1-5, the plate (60) on which the arms (61) and (62) are hinged does not face outwards (i.e. beyond the pins of the tractor's linkage) as in conventional machines of the known type, but is on the same axis or, rather, further internal from the linkage.

Referring again to the drawings, in particular to Fig.1, the value of the distance (K) between a theoretical axis (W) passing from the point of hinge of the articulation means (6) and a theoretical axis (Y) passing between the connection portions between the connection structure (10) and the arms of the three-point hitch is always greater than or equal to zero.

This particular configuration of the machine (1), which essentially brings the hinge of the parallelogram arms behind that of the lift arms, allows the cardan shaft to be used at 1000 rpm with an extremely limited offset between its telescopic components (50, 51). In other words, the displacement of the proximal hinge point of the articulated parallelogram (5) to a position internal in respect to the lift arms results in an extremely favourable geometry of the machine that allows the cardan shaft to be used in all operating ranges/angles, which would be impossible with known agricultural machines in which this hinge point is outside the connecting structure (10).

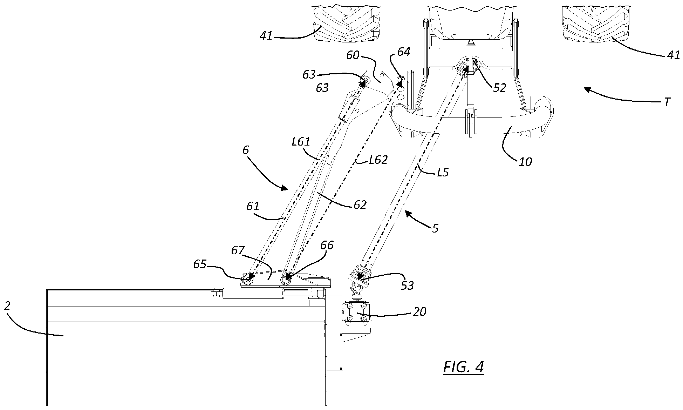

A fundamental aspect of the present invention relates to the fact that the length of the cardan shaft (5) is substantially equal to the length of the segments geometrically joining the hinge points (63, 65; 64, 66) of the articulating means (6). With reference to Figs. 1-5, the value (L5) of the length of the cardan shaft (5) corresponds to the value of the lengths (L61, L62) of the movable sides of the articulated parallelogram defining the articulating means (6). In Fig. 4, the reference (L61) indicates the length of the arm (61) that is hinged at the hinge points (63) and (65), while the reference (L62) indicates the length of the segment that geometrically joins the hinge points (64) and (66), around which the arm (62) is hinged, which has its proximal end curved so as not to interfere with the structure (10) during rotation around the pivot or hinge point (64).

In other words, the cardan shaft (5) has its minimum length, which can be seen in the configuration of Fig.1 in which its inner telescopic element (51) is substantially completely covered by the outer telescopic element (50), which corresponds to the lengths (L61) and (L62) of the arms (61) and (62) of the articulated parallelogram (6), considering as the length of the arm (62) the value (L62) corresponding to its generatrix, i.e., to the segment joining the two pins (64, 66) around which it is hinged.

When the head (2) of the agricultural machine carried by the tractor (T) is in the configuration of maximum extension of the cardan shaft (5), for example in a configuration comparable to that represented in Fig.3, the same cardan shaft (5) presents a considerably smaller extension compared to the extension reached in similar configurations by cardan shafts that equip traditional type equipment. By way of example, the maximum extension reached by a cardan shaft made in accordance with the present invention is contained in 10% of the length of the same cardan shaft. For example, experimental tests carried out by the applicant have shown maximum offsets contained between 10cm and 15cm for cardan shafts of 210cm, i.e. offsets contained between 4.7% and 7.1%. Obviously, the quotation of such values does not constitute a limit for the present solution but is intended as an experimental value indicating the actual limited maximum extension of the cardan shaft in all operating situations. Another innovative aspect of the present invention relates to the positioning of the coupling (20) to which the cardan shaft (5) is connected to the head (2). According to the invention, an external positioning, lateral to the header (2), i.e. shifted to the right or left along the direction of lateral displacement of the header (2) indicated with (X) in the drawings, is preferable.

In conclusion, it is possible to affirm that the invention relates to an agricultural machine (1) of the usable type carried by a tractor (T) from which it receives motion by means of a cardan shaft (5) kinematically connecting a power take-off (30) of the tractor (T) with a corresponding coupling (20) provided on a head (2) of the machine (1), said agricultural machine (1) being provided with a connection structure (10) provided with means or elements of connection (11, 12, 13) to a three-point hitch (31, 32, 33) comprising two connections (11, 12) for the lift arms (31, 32) presented by the tractor (T); between said connecting structure (10) and said head (2) being arranged and acting means of articulation (6) which are hinged in at least one hinge point (63, 64) to the structure (10) and in at least one hinge point (65, 66) to the head (2). The agricultural machine (1) is characterized in that the hinge point (63, 64) of the articulation means (6) to the connecting structure (10) is arranged aligned with or internal with respect to the connections (11, 12) for the lift arms (31, 32), i.e. the hinge point (63, 64) is arranged aligned with or internal with respect to said connections (11, 12) when the machine (1) is supported at the front by the tractor (T).

The hinge point (63, 64) of said articulation means (6) to the linkage structure (10) is disposed internal to the connections (11, 12) for the lift arms (31, 32).

The articulation means (6) may comprise an articulated parallelogram comprising two arms (61) and (62) which are hinged at their proximal ends to a bracket (60) attached to the connecting structure (10) and at their distal ends to a plate (67) attached to the operating head (2) of the machine (1). On the bracket (60) there are two hinge points or pins (63) and (64) around which the arm (61) and the arm (62) are hinged, respectively; on the plate (67) there are two hinge points or pins (65) and (66) around which the arm (61) and the arm (62) are hinged, respectively.

Still with reference to the examples of Figs. 1-5, the cardan shaft (5) is unique and is composed of two coaxial tubular elements (50, 51) fitted one on the other.

The machine (1) is an operating machine intended for one of the following uses: agriculture, forestry, road maintenance, riverbed maintenance. The agricultural machine is an operating machine among those included in the set consisting of: brush cutter, mulcher, ditch digger, forestry equipment, soil working equipment.

Moreover, the value (L5) of the minimum length of said cardan shaft (5) is substantially equal to the value (L61, L62) of the length of the segments geometrically joining the hinge points (63, 64) of the articulation means (6) associated with said structure (10) with the corresponding hinge points (65, 66) of the articulation means (6) associated with said head (2).

As described above, the maximum extraction between said tubular elements (50, 51) forming said cardan shaft (5) is less than 10%.

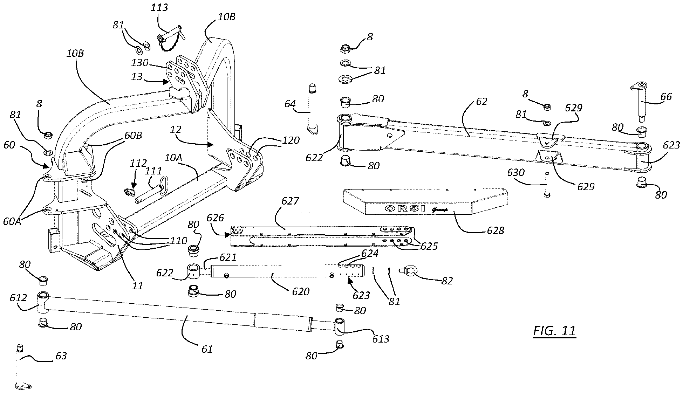

In the example illustrated in Figs.6-11, the articulation means (6) comprise two arms (61) and (62) which are hinged in their proximal ends to a bracket (60) fixed to the connection structure (10) and in their distal ends to a plate (67) fixed to the operating head (2) of the machine (1). In particular, on the bracket (60) there are provided two hinge points or pins (63) and (64) around which the arm (61) and the arm (62) are hinged, respectively. Similarly, two hinge points or pins (65) and (66) are provided on the plate (67) around which the arm (61) and the arm (62) are hinged, respectively.

The kinematic connection between the power take-off (30) of the tractor (T) and the coupling (20) located on the operating head (2) is defined by a cardan shaft (5) in a single body. In particular, the cardan shaft (5) is provided with a proximal end (52) connected to the power take-off (30) of the tractor (T) and a distal end (53) connected to the coupling (20) located on the operating head (2). In practice, there is provided a single transmission means connecting the transmission between the tractor (T) and the operating head (2), in the example consisting of a mulcher (2).

Advantageously, in accordance with the invention, the means of articulation (6) between the tractor and the machine are supported by the connecting structure (10) at a point which is never external to the connecting portions of the same structure intended for the three-point hitch of the tractor, in particular, the hinge points (63) and (64) are never external to the points (31) and (32) of the lifting arms, i.e., the hinge points (63) and (64) are no further from the tractor than said points (31) and (32) of the lifting arms.

In this description the term external means further away from the tractor. In practice, when the machine (1) is carried at the front by the tractor (T), a first point is considered to be further internal than a second point when the first point is closer to the tractor, i.e. further back in the forward direction (V) of the tractor (T). In the present description, the direction of travel (V) of the tractor (T) corresponds to a first direction (V) indicated as longitudinal, while the direction (X) orthogonal thereto is indicated as transverse direction (X).

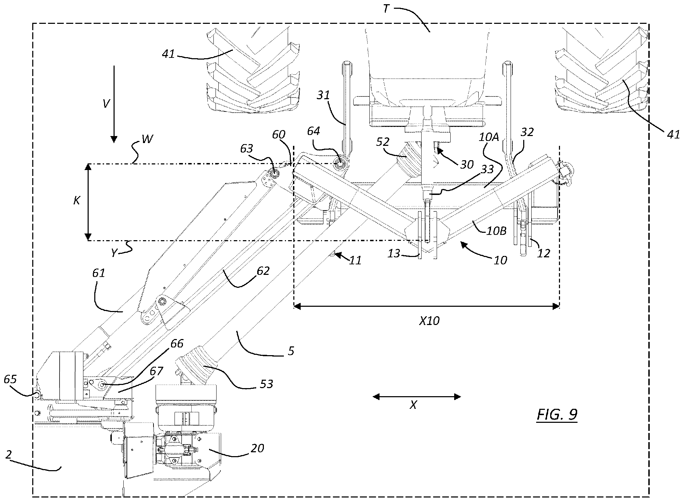

Advantageously, moreover, one of the hinge points of the articulation means (6), defined by the pin (64), in addition to being internal to the structure (10) in the longitudinal direction, is also internal to the same structure (1) in the transverse direction. In practice, with reference to Fig.9, the hinge point of the arm (62), which is defined by the pin (64) is placed further back (see K value) with respect to the structure (10) and is placed inside the same structure in the transverse direction (X). The pin (64) is therefore between the structure (10) and the tractor (T) in the longitudinal direction (V) and is inside the span (X10) defined by the projection in the transverse direction from the same structure (10). This particular arrangement of the hinge point makes it possible to achieve angles that have been found to be surprising when compared to a known machine in which the hinge points of the means of articulation are external to the same support structure in the longitudinal and transverse directions. As an example, the value of the angle indicated with (α) in Fig.8 is substantially equal to 30°. In this way, the operating head (2) can be kept in front of the tractor (T) in the centre of its path, i.e. in an area in which its control is safe.

With reference to the drawings in Figs. 6-11, the plate (60) on which the arms (61) and (62) are hinged does not face outwards (i.e. beyond the pins of the tractor's lift attachment) as in traditional machines of the known type, but is on the same axis or, better still, more internal with respect to the lift attachment. At the same time, the same plate (60) has at least one internal portion according to the transverse direction (X) so as to arrange also in the transverse direction (X) the pin (64) within the area (X10) defined by the structure (10).

Referring again to the drawings, in particular to Fig.9, the value of the distance (K) between a theoretical axis (W) passing through the hinge point of the means of articulation (6) and a theoretical axis (Y) passing between the portions of connection between the connecting structure (10) and the arms of the three-point hitch is always greater than or equal to zero, contributing to the achievement of the advantages previously described. In addition, the arrangement of the hinge point (64) within the structure (10) in the transverse direction (X) further contributes to increasing the possibility of machine articulation, even in the case of a single-body cardan shaft (5).

In other words, according to the invention and with reference to Figs.6-11, the agricultural machine (1) is moved along a longitudinal direction (V) and the means of articulation (6) comprise an arm (62) whose hinge point (64) to the connecting structure (10) is arranged inside the space (X10) defined by said structure (10) in a direction (X) transverse to said longitudinal direction.

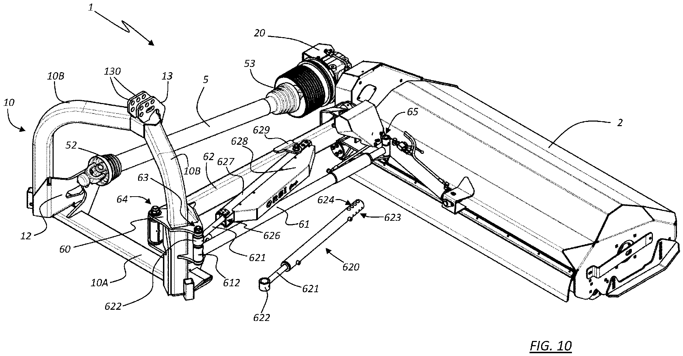

As better shown in Figs.10-11, a bracket (629) is placed on the arm (62) for receiving a corresponding pin (630) intended for fixing the distal end (623) of a jack (620). In the drawings, the bracket (629) is formed of two parallel portions drilled to receive the pin (630). The stem (621) supports the proximal end (622) of the jack, the proximal end being collar-like in shape and hinged on a pin (63) to which the other arm (61) is hinged. The pin (64) is received by the coaxial holes (60B) provided on the plate (60) supported by the structure (10). On the same plate (60) there are two more coaxial holes (60A) intended to accommodate the pin (63) that fixes the arm (61).

In the example of Figs.6-11, the arm (61) defines a strut; in particular, in the illustrated example the arm (61) is formed by a gas accumulator/shock absorber capable of constituting a compression constraint (i.e. a strut) provided with a safety limit; under normal conditions the arm (61) is rigid and fixed, but when the operating head (2) encounters an obstacle that prevents the advancement, the gas accumulator/shock absorber it unlocks, shortening its extension in length and thus preventing any damage. At its ends, the arm (61) is provided with a cylindrical collar (612) fitted on the pin (63) and a cylindrical collar (613) fitted on the pin (65).

In the drawings, reference (8) indicates a nut, reference (80) indicates a bushing and reference (81) indicates a washer, a flat washer or other spacer. The function of these components is not described since they are of known type.

The arm (62) is provided with stroke adjustment means, designed to allow the variation of the end strokes according to the use of the machine (1) and the conformation of the support structure (10) and the three-point hitch (31, 32, 33) presented by the tractor (T). The adjustment of the end strokes, as described below, is extremely simple and does not require any special skills or instrumentation.

The end-of-stroke adjustment means of the jack (620) includes an end-of-stroke adjuster (627) defined by a box body that can be fitted on the jack (620). The end-of-stroke adjuster (627) is provided at its distal end with a first plurality of holes (625) through which passes the pin (630) that secures the distal end (623) of the jack (620). On the distal end (623) of the jack (620) there is provided a second plurality of holes (624) also passable through by the pin (630). A ring or eyebolt (82) can be provided on the distal end (623). Thanks to the presence of holes (625) and (624) it is possible to fix, by positioning the pin (630) in the said first (625) and second plurality of holes (624), two different end-strokes for respective configurations of minimum and maximum extension of the jack (620), corresponding to different positions of the machine (1).

In practice, it is sufficient to insert the pin (630) in one of the holes (624) to vary the maximum opening end-stroke, i.e. the maximum extension value of the jack (620) that determines the so-called "maximum opening" of the machine (corresponding, for instance, to the configuration of Fig.8), with the condition that the more the hole is external (i.e. placed more distally) the greater will be the rotation carried out by the arm (62) for the action of the jack (620); on the contrary, the more the hole is internal (i.e. placed more proximally) the less will be the rotation carried out by the arm (62) for the action of the jack (620).

As for the closing or minimum opening end-stroke, this end-stroke is determined by the contact of the proximal portion (626) of the body of the end-stroke adjuster (627) with the hollow cylindrical body or collar (622) which fixes the jack (620) to the pin (63). In this case, the variation in the hole (625) used to pass the pin (630) results in a corresponding variation in the retraction of the jack (620). Specifically, if the pin (630) passes through the more externally placed hole (625) (i.e., the more distally placed hole on the same adjuster), the portion (626) of the adjuster (627) will impact the collar (622) sooner than when the same pin (63) is inserted into a more internally placed hole (more proximal position). In practice, if the jack (620) is to be retracted by a maximum value (i.e., if it is to "shorten" as much as possible) the pin (630) must pass through the more internally placed hole (625).

Advantageously, and surprisingly compared to the known technique of using internal spacers (or clips) to limit the travel of the jacks, with the present invention it is possible to independently adjust the two end-strokes using the same connection comprising bracket (629), pin (630), holes (625) and holes (624).

Thus, with the present invention, it is possible to adjust the two end-strokes in a simple, intuitive and safe manner.

In the example of the attached drawings, the adjuster (627) is fitted on the jack (620) and is covered by a cover element (628) which in Figs. 10-11 is marked with the inscription "ORSI Group" which is not a limitation.

In the example of Figs.6-11, the connection structure (10) consists of a base portion (10A) placed below and two upper arched portions (10B) that join at the top in correspondence with the connection element (13) for the three-point attachment placed above. The upper connection element (13) is outwardly displaced with respect to said longitudinal direction (V), i.e. it is outwardly located with respect to the pin or hinge point (64).

Always with reference to the connection structure (10), the connection elements (11, 12, 13) comprise three pairs of plates provided with corresponding plurality of holes (110, 120, 130) so as to allow the fixing of the structure itself (10) to three-point connections of different sizes. In this way, the compatibility of the machine of the invention is really wide and allows the association with tractors provided with different types of three-point couplings. For attachment in the drawings, a pin with a handle (111), possibly provided with a snap pin, and a pin with a handle (113) have been represented for illustrative purposes. Obviously, the fastening means may be different.

Lastly, it should be noted that some of the handling, control and monitoring components of the elements described above and illustrated in the attached drawings are of a type known to automation technicians and, therefore, have not been described in further detail for the sake of simplicity. Moreover, the details of execution may vary remaining within the limits of the protection granted by the attached claims.

## Claims

1. Agricultural machine (1), of the type carried by a tractor (T) from which it receives motion via a cardan shaft (5) which kinematically connects a power take-off (30) of the tractor (T) with a corresponding coupling (20) provided on an operational head (2) of said machine (1), said agricultural machine (1) being provided with a connection structure (10) provided with connection elements (11, 12, 13) for a three-point hitch (31, 32, 33) of the tractor (T); between said connecting structure (10) and said head (2) being arranged and
acting articulation means (6) which are hinged at least at one hinge point (63, 64) to said structure (10) and at least at one hinge point (65, 66) to said head (2),
**characterized in that** said hinge point (63, 64) of said articulation means (6) to said connecting structure (10) is arranged aligned or internal with respect to the connections (11, 12) for the attachments of the lift arms of the three-point hitch 2), i.e. said hinge point (63, 64) is arranged aligned or backward with respect to said connection elements (11, 12) when the machine (1) is supported at the front by a tractor (T) and is arranged aligned or forward with respect to said connection elements (11, 12) when the machine (1) is supported at the rear by a tractor (T).

2. Agricultural machine according to claim 1, **characterized in that** said hinge point (63, 64) of said articulation means (6) to the connection structure (10) is disposed internal with respect to said connections (11, 12) for the attachments of the lift arms (31, 32).

3. Agricultural machine according to claim 1 and/or 2, **characterized in that** said articulation means (6) comprise an articulated parallelogram consisting of two arms (61) and (62) which are hinged in their proximal ends to a bracket (60) fixed to the connection structure (10) and in their distal ends to a plate (67) fixed to the operational head (2) of the machine (1).

4. Agricultural machine according to claim 3, **characterized in that** on the bracket (60) there are provided two hinge points or pins (63) and (64) around which the arm (61) and the arm (62) are hinged, respectively, and **in that** on the plate (67) there are provided two hinge points or pins (65) and (66) around which the arm (61) and the arm (62) are hinged, respectively.

5. Agricultural machine according to any of the preceding claims, **characterized in that** said cardan shaft (5) is unique and comprises two coaxial tubular elements (50, 51) fitted over each other.

6. Agricultural machine according to any one of the preceding claims, **characterized in that** it is an operating machine intended for one of the uses included in the group consisting of: agricultural sector, forestry sector, road maintenance, riverbed maintenance.

7. Agricultural machine according to any of the preceding claims, **characterized in that** the value (L5) of the minimum length of said cardan shaft (5) is substantially equal to the value (L61, L62) of the length of the segments geometrically joining the hinge points (63, 64) of the articulation means (6) associated with said structure (10) with the corresponding hinge points (65, 66) of the articulation means (6) associated with said head (2).

8. Agricultural machine according to claim 5, **characterized in that** the maximum extraction between said tubular elements (50, 51) which form said cardan shaft (5) is less than 10%.

9. Agricultural machine according to claim 1 or 2, wherein the machine (1) is moved along a longitudinal direction (V), **characterized in that** said articulating means (6) comprise an arm (62) whose hinge point (64) to the connecting structure (10) is disposed internal to the encumbrance (X10) defined by said structure (10) in a direction (X) transverse to said longitudinal direction.

10. Agricultural machine according to claim 9, **characterized in that** on said arm (62) is placed a bracket (629) suitable to receive a corresponding pin (630) for fixing the distal end (623) of a jack (620), whose proximal end (622) is hinged on the pin (64) on which said arm (62) is hinged, said jack (620) being provided with stroke adjustment means formed by an end-stroke adjuster (627) defined by a box-shaped body that can be fitted on said jack (620) and provided in its distal end with a first plurality of holes (625) through which passes the pin (630) fixing the distal end (623) of said jack (620), on said distal end (623) being provided a second plurality of holes (624) also passable through by the pin (630), so as to define, by means of the positioning of the pin (630) in said first plurality of holes (625) and second plurality of holes (624), two different end-strokes for respective configurations of minimum and maximum extension of the jack (620) corresponding to different positions of the machine.

11. Agricultural machine according to claim 8 or 9, **characterized in that** said connecting structure (10) comprises a base portion (10A) placed inferiorly and two upper arched portions (10B) joining superiorly in correspondence to the connecting element (13) for the three-point attachment placed superiorly, said connecting element placed superiorly (13) being displaced outwardly with respect to said longitudinal direction (V), i.e. being more outwardly with respect to said hinge point (64).

12. Agricultural machine according to claim 8 or 9, **characterized in that** it comprises a second arm (61) formed by a gas accumulator/shock absorber suitable for constituting a compression constraint and provided with a safety limit.

13. Agricultural machine according to any one of the preceding claims, **characterized in that** the connection elements (11, 12, 13) supported by said connecting structure (10) comprise three pairs of plates provided with corresponding pluralities of holes (110, 120, 130) so as to allow the attachment of said structure (10) to differentially sized three-point connections.

14. Agricultural machine according to one or more of claims 1 to 4 and 6 to 13, **characterized in that** said cardan shaft (5) is in a single body and comprises a single tubular element.

15. Agricultural machine according to one or more of the preceding claims, **characterized in that** it is an operating machine among those included in the group composed of: brush cutter, mulcher, ditch digger, forestry working equipment, soil working equipment.

## Patentansprüche

1. Landwirtschaftliche Maschine (1) des Typs, der von einem Traktor (T) getragen wird, von dem sie über eine Kardanwelle (5) angetrieben wird, die eine Zapfwelle (30) des Traktors (T) kinematisch mit einer entsprechenden Kupplung (20) verbindet, die an einem Arbeitskopf (2) der Maschine (1) vorgesehen ist, wobei die landwirtschaftliche Maschine (1) mit einer Verbindungsstruktur (10) versehen ist, die mit Verbindungselementen (11, 12, 13) für einen Dreipunkt-Kraftheber (31, 32, 33) des Traktors (T) versehen ist; wobei zwischen der Verbindungsstruktur (10) und dem Kopf (2)
Gelenkmittel (6) arrangiert sind und wirken, die an mindestens einem Anlenkpunkt (63, 64) an der Struktur (10) und an mindestens einem Anlenkpunkt (65, 66) am Kopf (2) angelenkt sind,
**dadurch gekennzeichnet, dass** der Anlenkpunkt (63, 64) der Gelenkmittel (6) an der Verbindungsstruktur (10) in Bezug auf die Verbindungen (11, 12) für die Befestigungen der Hubarme des Dreipunkt-Krafthebers (31, 32) ausgerichtet oder innerhalb dieser arrangiert ist, d. h. der Anlenkpunkt (63, 64) in Bezug auf die Verbindungselemente (11, 12) ausgerichtet oder nach hinten versetzt arrangiert ist, wenn die Maschine (1) an der Vorderseite von einem Traktor (T) getragen wird, und in Bezug auf die Verbindungselemente (11, 12) ausgerichtet oder nach vorne versetzt arrangiert ist, wenn die Maschine (1) an der Hinterseite von einem Traktor (T) getragen wird.

2. Landwirtschaftliche Maschine nach Anspruch 1, **dadurch gekennzeichnet, dass** der Anlenkpunkt (63, 64) der Gelenkmittel (6) an der Verbindungsstruktur (10) in Bezug auf die Verbindungen (11, 12) innen für die Befestigungen der Hubarme (31, 32) angeordnet ist.

3. Landwirtschaftliche Maschine nach Anspruch 1 und/oder 2, **dadurch gekennzeichnet, dass** die Gelenkmittel (6) ein Gelenkparallelogramm umfassen, das aus zwei Armen (61) und (62) besteht, die an ihren proximalen Enden an einer Halterung (60), die an der Verbindungsstruktur (10) befestigt ist, und an ihren distalen Enden an einer Platte (67), die am Arbeitskopf (2) der Maschine (1) befestigt ist, angelenkt sind.

4. Landwirtschaftliche Maschine nach Anspruch 3, **dadurch gekennzeichnet, dass** an der Halterung (60) zwei Anlenkpunkte oder Stifte (63) und (64) vorgesehen sind, um die der Arm (61) bzw. der Arm (62) angelenkt sind, und dass an der Platte (67) zwei Anlenkpunkte oder Stifte (65) und (66) vorgesehen sind, um die der Arm (61) bzw. der Arm (62) angelenkt sind.

5. Landwirtschaftliche Maschine nach einem der vorhergehenden Ansprüche, **dadurch gekennzeichnet, dass** die Kardanwelle (5) einzigartig ist und zwei übereinander angebrachte koaxiale Rohrelemente (50, 51) umfasst.

6. Landwirtschaftliche Maschine nach einem der vorhergehenden Ansprüche, **dadurch gekennzeichnet, dass** es sich um eine Arbeitsmaschine handelt, die für einen der in der folgenden Gruppe enthaltenen Verwendungszwecke bestimmt ist: Agrarsektor, Forstsektor, Straßeninstandhaltung, Flussbettinstandhaltung.

7. Landwirtschaftliche Maschine nach einem der vorhergehenden Ansprüche, **dadurch gekennzeichnet, dass** der Wert (L5) der Mindestlänge der Kardanwelle (5) im Wesentlichen gleich dem Wert (L61, L62) der Länge der Segmente ist, die die Anlenkpunkte (63, 64) der mit der Struktur (10) assoziierten Gelenkmittel (6) geometrisch mit den entsprechenden Anlenkpunkten (65, 66) der mit dem Kopf (2) assoziierten Gelenkmittel (6) anschließen.

8. Landwirtschaftliche Maschine nach Anspruch 5, **dadurch gekennzeichnet, dass** die maximale Extraktion zwischen den Rohrelementen (50, 51), die die Kardanwelle (5) bilden, weniger als 10 % beträgt.

9. Landwirtschaftliche Maschine nach Anspruch 1 oder 2, wobei die Maschine (1) entlang einer Längsrichtung (V) bewegt wird, **dadurch gekennzeichnet, dass** die Gelenkmittel (6) einen Arm (62) umfassen, dessen Anlenkpunkt (64) an der Verbindungsstruktur (10) innerhalb der durch die Struktur (10) definierten Begrenzung (X10) in einer Richtung (X) quer zur Längsrichtung angeordnet ist.

10. Landwirtschaftliche Maschine nach Anspruch 9, **dadurch gekennzeichnet, dass** an dem Arm (62) eine Halterung (629) platziert ist, die zum Aufnehmen eines entsprechenden Stifts (630) zum Befestigen des distalen Endes (623) eines Hebers (620) geeignet ist, dessen proximales Ende (622) an dem Stift (64) angelenkt ist, an dem der Arm (62) angelenkt ist, wobei der Heber (620) mit Hubeinstellmitteln versehen ist, die durch einen Endhubeinsteller (627) gebildet sind, der durch einen kastenförmigen Körper definiert ist, der an dem Heber (620) angebracht werden kann und an seinem distalen Ende mit einer ersten Vielzahl von Löchern (625) versehen ist, durch die der Stift (630) verläuft, der das distale Ende (623) des Hebers (620) befestigt, wobei an dem distalen Ende (623) eine zweite Vielzahl von Löchern (624) vorgesehen ist, durch die der Stift (630) auch verlaufen kann, um durch die Positionierung des Stifts (630) in der ersten Vielzahl von Löchern (625) und der zweiten Vielzahl von Löchern (624) zwei verschiedene Endhübe für jeweilige Konfigurationen der minimalen und maximalen Ausdehnung des Hebers (620) entsprechend unterschiedlicher Positionen der Maschine zu definieren.

11. Landwirtschaftliche Maschine nach Anspruch 8 oder 9, **dadurch gekennzeichnet, dass** die Verbindungsstruktur (10) einen unten platzierten Basisabschnitt (10A) und zwei obere gewölbte Abschnitte (10B) umfasst, die sich oben entsprechend dem oben platzierten Verbindungselement (13) für die Dreipunktbefestigung anschließen, wobei das oben (13) platzierte Verbindungselement in Bezug auf die Längsrichtung (V) nach außen versetzt ist, d. h. in Bezug auf den Anlenkpunkt (64) weiter außen liegt.

12. Landwirtschaftliche Maschine nach Anspruch 8 oder 9, **dadurch gekennzeichnet, dass** sie einen zweiten Arm (61) umfasst, der aus einem Gasspeicher/Stoßdämpfer gebildet ist, der zum Bilden einer Kompressionsbegrenzung geeignet ist und mit einer Sicherheitsgrenze versehen ist.

13. Landwirtschaftliche Maschine nach einem der vorhergehenden Ansprüche, **dadurch gekennzeichnet, dass** die von der Verbindungsstruktur (10) getragenen Verbindungselemente (11, 12, 13) drei Plattenpaare umfassen, die mit entsprechenden Vielzahlen von Löchern (110, 120, 130) versehen sind, um die Befestigung der Struktur (10) an Dreipunktverbindungen unterschiedlicher Größe zu ermöglichen.

14. Landwirtschaftliche Maschine nach einem oder mehreren der Ansprüche 1 bis 4 und 6 bis 13, **dadurch gekennzeichnet, dass** die Kardanwelle (5) aus einem einzigen Körper besteht und ein einziges Rohrelement umfasst.

15. Landwirtschaftliche Maschine nach einem oder mehreren der vorhergehenden Ansprüche, **dadurch gekennzeichnet, dass** es sich um eine Arbeitsmaschine unter denen aus der Gruppe bestehend aus: Freischneider, Mulcher, Grabengräber, Forstarbeitsgerät, Bodenbearbeitungsgerät handelt.

## Revendications

1. Machine agricole (1), du type porté par un tracteur (T) en provenance duquel elle reçoit un mouvement par l'intermédiaire d'un arbre à cardan (5) qui relie cinématiquement une prise de force (30) du tracteur (T) à un accouplement correspondant (20) prévu sur une tête fonctionnelle (2) de ladite machine (1), ladite machine agricole (1) étant dotée d'une structure de liaison (10) munie d'éléments de liaison (11, 12, 13) pour un attelage à trois points (31, 32, 33) du tracteur (T) ; entre ladite structure de liaison (10) et ladite tête (2) étant agencés et
fonctionnant des moyens d'articulation (6) qui sont articulés au moins au niveau d'un point d'articulation (63, 64) à ladite structure (10) et au moins au niveau d'un point d'articulation (65, 66) à ladite tête (2),
**caractérisée en ce que** ledit point d'articulation (63, 64) desdits moyens d'articulation (6) à ladite structure de liaison (10) est agencé aligné ou à l'intérieur par rapport aux liaisons (11, 12) pour les fixations des bras de levage de l'attelage trois points (31, 32), c'est-à-dire ledit point d'articulation (63, 64) est agencé aligné ou en arrière par rapport auxdits éléments de liaison (11, 12) lorsque la machine (1) est supportée à l'avant par un tracteur (T) et est agencé aligné ou en avant par rapport auxdits éléments de liaison (11, 12) lorsque la machine (1) est supportée à l'arrière par un tracteur (T).

2. Machine agricole selon la revendication 1, **caractérisée en ce que** ledit point d'articulation (63, 64) desdits moyens d'articulation (6) à la structure de liaison (10) est disposé à l'intérieur par rapport auxdites liaisons (11, 12) pour les fixations des bras de levage (31, 32).

3. Machine agricole selon la revendication 1 et/ou 2, **caractérisée en ce que** lesdits moyens d'articulation (6) comprennent un parallélogramme articulé constitué de deux bras (61) et (62) qui sont articulés dans leurs extrémités proximales à un support (60) fixé à la structure de liaison (10) et dans leurs extrémités distales à une plaque (67) fixée à la tête fonctionnelle (2) de la machine (1).

4. Machine agricole selon la revendication 3, **caractérisée en ce que** sur le support (60) sont prévus deux points ou axes d'articulation (63) et (64) autour desquels sont respectivement articulés le bras (61) et le bras (62), et **en ce que** sur la plaque (67) sont prévus deux points ou axes d'articulation (65) et (66) autour desquels sont respectivement articulés le bras (61) et le bras (62).

5. Machine agricole selon l'une quelconque des revendications précédentes, **caractérisée en ce que** ledit arbre à cardan (5) est unique et comprend deux éléments tubulaires coaxiaux (50, 51) emboîtés l'un sur l'autre.

6. Machine agricole selon l'une quelconque des revendications précédentes, **caractérisée en ce qu'**elle est une machine d'exploitation destinée à l'une des utilisations comprises dans le groupe constitué par : le secteur agricole, le secteur forestier, l'entretien des routes, l'entretien des lits de rivière.

7. Machine agricole selon l'une quelconque des revendications précédentes, **caractérisée en ce que** la valeur (L5) de la longueur minimale dudit arbre à cardan (5) est sensiblement égale à la valeur (L61, L62) de la longueur des segments joignant géométriquement les points d'articulation (63, 64) des moyens d'articulation (6) associés à ladite structure (10) avec les points d'articulation correspondants (65, 66) des moyens d'articulation (6) associés à ladite tête (2).

8. Machine agricole selon la revendication 5, **caractérisée en ce que** l'extraction maximale entre lesdits éléments tubulaires (50, 51) qui forment ledit arbre à cardan (5) est inférieure à 10 %.

9. Machine agricole selon la revendication 1 ou 2, ladite machine (1) étant déplacée le long d'une direction longitudinale (V), **caractérisée en ce que** lesdits moyens d'articulation (6) comprennent un bras (62) dont le point d'articulation (64) à la structure de liaison (10) est disposé à l'intérieur de l'encombrement (X10) défini par ladite structure (10) selon une direction (X) transversale à ladite direction longitudinale.

10. Machine agricole selon la revendication 9, **caractérisée en ce que** sur ledit bras (62) est placé un support (629) apte à recevoir un axe correspondant (630) de fixation de l'extrémité distale (623) d'un vérin (620), dont l'extrémité proximale (622) est articulée sur l'axe (64) sur lequel est articulé ledit bras (62), ledit vérin (620) étant doté de moyens de réglage de course formés par un dispositif de réglage de fin de course (627) défini par un corps en forme de boîte pouvant être monté sur ledit vérin (620) et doté dans son extrémité distale d'une première pluralité de trous (625) à travers lesquels passe l'axe (630) fixant l'extrémité distale (623) dudit vérin (620), sur ladite extrémité distale (623) étant prévue une seconde pluralité de trous (624) également traversables par l'axe (630), de façon à définir, au moyen du positionnement de l'axe (630) dans ladite première pluralité de trous (625) et ladite seconde pluralité de trous (624), deux fins de course finales différentes pour des configurations respectives d'extension minimale et maximale du vérin (620) correspondant à différentes positions de la machine.

11. Machine agricole selon la revendication 8 ou 9, **caractérisée en ce que** ladite structure de liaison (10) comprend une partie de base (10A) placée inférieurement et deux parties arquées supérieures (10B) se rejoignant supérieurement en correspondance avec l'élément de liaison (13) pour la fixation à trois points placé supérieurement, ledit élément de liaison placé supérieurement (13) étant déplacé vers l'extérieur par rapport à ladite direction longitudinale (V), c'est-à-dire étant plus vers l'extérieur par rapport audit point d'articulation (64).

12. Machine agricole selon la revendication 8 ou 9, **caractérisée en ce qu'**elle comprend un second bras (61) formé par un accumulateur de gaz/amortisseur de choc apte à constituer une contrainte de compression et doté d'une limite de sécurité.

13. Machine agricole selon l'une quelconque des revendications précédentes, **caractérisée en ce que** les éléments de liaison (11, 12, 13) supportés par ladite structure de liaison (10) comprennent trois paires de plaques dotées de pluralités correspondantes de trous (110, 120, 130) de façon à permettre la fixation de ladite structure (10) à des liaisons trois points de dimensions différenciées.

14. Machine agricole selon une ou plusieurs des revendications 1 à 4 et 6 à 13, **caractérisée en ce que** ledit arbre à cardan (5) est dans un seul corps et comprend un seul élément tubulaire.

15. Machine agricole selon une ou plusieurs des revendications précédentes, **caractérisée en ce qu'**elle est une machine d'exploitation parmi celles comprises dans le groupe composé de :
débroussailleuse, broyeur, excavateur à fossé, équipement de travail forestier, équipement de travail du sol.
